# EUROPEAN PATENT APPLICATION

(11) **EP 4 239 916 A1**
(43) Date of publication of application: **06.09.2023**
(21) Application number: 20959075.1
(22) Date of filing: 28.10.2020
(51) Int. Cl.: H04L 1/00

(54) **COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/124512
(87) International publication number: WO 2022/087912

(57) **Abstract**

Provided are a communication method and a communication device. The communication method may comprise: determining a first message frame, the first message frame comprising information for indicating a resource unit, wherein the resource unit is a single type resource unit or a combined resource unit, and the resource unit is used for a station to perform uplink transmission; sending the first message frame. The technical solutions provided by the embodiments of the disclosure may enable compatibility, and improve spectral utilization efficiency and system throughput.

## Description

### TECHNICAL FIELD

The disclosure relates to the field of communication, in particular to a communication method and a communication device.

### BACKGROUND

Institute of Electrical and Electronic Engineers (IEEE) established Study Group (SG) IEEE802.11be to study the next generation of Wi-Fi technology (i.e., IEEE802.11a/b/g/n/ac). The scope of the research includes 320 MHz bandwidth transmission, and aggregation and cooperation of multiple frequency bands. The research expects to increase the rate and throughput by at least four times relative to the existing IEEE802.11ax standard, and its main application scenarios are video transfer, Augmented Reality (AR), and Virtual Reality (VR).

The aggregation and cooperation of multiple frequency bands refers to communications between devices in frequency bands of 2.4GHz, 5.8GHz and 6-7GHz at the same time, and a new Media Access Control (MAC) mechanism needs to be defined to manage the communications. In addition, a low latency transmission is expected to be supported in the IEEE802.11be standard.

In the discussion of IEEE802.11be standard, the maximum bandwidth supported is 320 MHz (160 MHz+160 MHz), and the IEEE802.11be standard may also support 240 MHz (160 MHz+80 MHz) and bandwidths supported in the IEEE802.11ax standard.

In the IEEE802.11ax standard, an Access point (AP) can assign a single-type Resource Unit (RU) to a single user (e.g., station) at a time by, for example, a trigger frame in a certain communication bandwidth. For example, the single-type RU can be 26-tone, 52-tone, 106-tone, 242-tone, 484-tone, and 996-tone. In addition, in the IEEE802.11be standard, the AP can assign a multi-RU to an IEEE802.11be Station (STA) in a certain bandwidth.

In an actual communication environment, an old STA (e.g., a STA supporting the IEEE802.11ax standard) and a new STA (e.g., a STA supporting the IEEE802.11be standard) may both exist, so the AP may need to simultaneously assign a single-type RU to the old STA and possibly a multi-RU to the IEEE802.11be STA. However, since the existing communication method is only applicable for assigning the single-type RU and is inapplicable for assigning the multi-RU, enhancements are needed when considering backward compatibility.

### SUMMARY

Aspects of the disclosure will at least solve the above problems and/or drawbacks. The embodiments of the disclosure provide the following technical solutions.

A communication method, performed by an AP, is provided according to an example embodiment of the disclosure. The method includes: determining a first message frame, the first message frame including information for indicating a RU, in which the RU is a single-type RU or a multi-RU, and the RU is used by a STA for uplink transmission; and sending the first message frame.

A communication method, performed by a STA, is provided according to an example embodiment of the disclosure. The method includes: receiving a first message frame, in which the first message frame includes information for indicating a RU, and the RU is a single-type RU or a multi-RU; and performing uplink transmission using the RU.

A communication device, applied to an AP, is provided according to an example embodiment of the disclosure. The device includes: a process module, configured to determine a first message frame, the first message frame including information for indicating a RU, in which the RU is a single-type RU or a multi-RU, and the RU is used by a STA for uplink transmission; and a communication module, configured to send the first message frame.

A communication device, applied to a STA, is provided according to an example embodiment of the disclosure. The device includes: a receiving module, configured to receive a first message frame, in which the first message frame includes information for indicating a RU, and the RU is a single-type RU or a multi-RU; and a sending module, configured to perform uplink transmission using the RU.

An electronic device is provided according to an example embodiment of the disclosure. The electronic device includes: a memory, a processor and a computer program stored on the memory and executable by the processor. When the computer program is executed by the processor, the above method is implemented.

A computer readable storage medium having a computer program stored thereon is provided according to an example embodiment of the disclosure. When the computer program is executed by a processor, the above method is implemented.

The technical solutions provided by the embodiments of the disclosure may enable compatibility, and improve spectral utilization efficiency and system throughput.

### BRIEF DESCRIPTION OF THE DRAWINGS

The above and additional features of the embodiments of the disclosure will become more apparent by describing the embodiments of the disclosure in detail with reference to the accompanying drawings.
FIG. 1 is a schematic diagram illustrating a wireless communication scenario.
FIG. 2 is a flowchart illustrating a communication method according to an embodiment of the disclosure.
FIG. 3 is a schematic diagram illustrating a first message frame.
FIG. 4 is a schematic diagram illustrating a common info field format.
FIG. 5 is a schematic diagram illustrating user info field format.
FIG. 6 is a flowchart illustrating another communication method according to an embodiment of the disclosure.
FIG. 7 is a block diagram illustrating a communication device according to an embodiment of the disclosure.
FIG. 8 is a block diagram illustrating another communication device according to an embodiment of the disclosure.

### DETAILED DESCRIPTION

The following description with reference to the accompanying drawings is provided to fully understand the embodiments of the disclosure defined by the appended claims and their equivalents. The embodiments of the disclosure include various specific details, which are considered to be examples only. In addition, descriptions of well-known techniques, functions and structures may be omitted for the sake of clarity and brevity.

It is understandable that the singular form used herein may also include the plural form, unless the context clearly indicates otherwise. It should also be understood that the term "includes" as used in this disclosure refers to the presence of the described features, integers, steps, operations, components and/or assemblies, but does not exclude the presence or addition of one or more other features, integers, steps, operations, components, assemblies and/or combinations thereof.

It is understandable that while the terms "first" and "second" may be used herein to describe various elements, these terms are used only to distinguish one element from another. Therefore, without departing from the teachings of the example embodiments, the first element discussed below may be referred to as the second element.

It is understandable that when the component is "connected" or "coupled" to another component, it may be directly connected or coupled to other components, or there may be an intermediate component. In addition, "connected" or "coupled" as used herein may include wirelessly connected or wirelessly coupled. The term "and/or" or the expression "at least one/at least one of ......" as used herein includes any and all combinations of one or more relevant listed items.

Unless otherwise defined, all terms used herein, including technical terms and scientific terms, have the same meaning as generally understood by those skilled in the art to which this disclosure belongs.

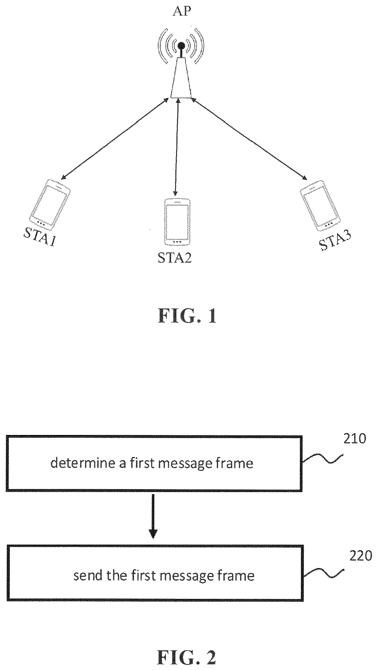

FIG. 1 is a schematic diagram illustrating a wireless communication scenario.

In a wireless local area network, one Basic Service Set (BSS) may be consisted of an Access Point (AP) and one or more stations (STAs) that communicate with the AP. One BSS may connect to a Distribution System (DS) via the AP and then access another BSS to form an Extended Service Set (ESS).

The AP is a wireless switch or a router used in a wireless network, which is also a core of the wireless network. The AP device can be used as a wireless base station and is mainly used as a bridge to connect the wireless network and a wired network. The AP is used to integrate wired and wireless networks.

As an example, the AP may include software applications and/or circuits and other types of nodes in the wireless network can perform internal and external communication with the wireless network via the AP. For example, the AP may be a terminal device or a network device provided with a Wireless Fidelity (Wi-Fi) chip.

As an example, the STA may include, but is not limited to: a cellular phone, a smart phone, a wearable device, a computer, a Personal Digital Assistant (PDA), a Personal Communication System (PCS) device, a Personal Information Manager (PIM), a Personal Navigation Device (PND), a global positioning system, a multimedia device, and an Internet of Things (IoT) device.

As illustrated in FIG. 1, one AP can communicate with three STAs (e.g., STA1, STA2, and STA3). FIG. 1 is only an example and is not used to limit the embodiments of the disclosure. For example, there may be any number and/or any type of APs and STAs.

FIG. 2 is a flowchart illustrating a communication method according to an embodiment of the disclosure. In the embodiment of the disclosure, the communication method can be performed by an AP.

As illustrated in FIG. 2, at step 210, a first message frame is determined. In detail, information about the RU assigned to the STA can be set by the first message frame, so that the STA can use the assigned RU based on the set information for uplink transmission when the first message frame is received.

According to the embodiment, the first message frame may include information for indicating a RU, and the RU may be used for uplink transmission by the STA. That is, the RU may be assigned to the STA via the first message frame, and thus the STA may use the assigned RU for uplink transmission. According to the embodiment, the RU can be a single-type RU or a multi-RU. In detail, since the IEEE802.11ax STA supports only the single-type RU, only the single-type RU is assigned to the IEEE802.11ax STA via the first message frame. The IEEE802.11be STA supports both the single-type RU and the multi-RU, the single-type RU or the multi-RU can be assigned to the IEEE802.11be STA via the first message frame. To clearly describe the technical ideas of the disclosure, examples of assigning the single-type RU for IEEE802.11ax STA and assigning the multi-RU for the IEEE802.11be STA are mainly described in the following context.

For example, the single-type RU may be assigned to the old STA via the first message frame, and the multi-RU may also be assigned to the new STA via the first message frame. Therefore, the new STA is compatible with the old STA when both the old STA and the new STA exist in the BSS. In this disclosure, for the sake of description, an example of the old STA may be a STA supporting the IEEE802.11ax standard, and an example of new STA may be a STA supporting the IEEE802.11be standard, which is not limited in the embodiments of the disclosure. In addition, in the following context, the STA supporting the IEEE802.11ax standard may be referred to as the IEEE802.11ax STA, and the STA supporting the IEEE802.11be standard may be referred to as the IEEE802.11be STA.

According to the embodiments, the single-type RU may indicate that the assigned RU only contains a specific number of subcarriers (i.e., tones). For example, the single-type RU may be: 26-tone, 52-tone, 106-tone, 242-tone, 484-tone, or 996-tone.

According to the embodiments, the multi-RU may be consisted of single-type RUs. In an embodiment, the multi-RU may be consisted of two specific single-type RUs and is bandwidth dependent. For example, the multi-RU may at least include: a first single-type RU and a second single-type RU. The first single-type RU has a different number of subcarriers than the second single-type RU. That is, the multi-RU may be consisted of at least two different single-type RUs, e.g., 26+52 tone (20/40 MHz), 106+26 tone (20/40 MHz), 484+242 tone (80 MHz), 484+996 tone (160 MHz), 996+484+242 tone (160 MHz), 2×996 tone (160 MHz), 2×996+484 tone (240 MHz), 3×996+484 tone (320 MHz), and 4×996 tone (160+160MHz /320MHz).

It is understandable that the single-type RU and the multi-RU described above are illustrative only and are not limitations on the scope of embodiments of the disclosure.

The information for indicating the RU included in the first message frame according to the embodiment of the disclosure will be described in detail below. For ease of description, in the following context, an example of the first message frame may be a trigger frame, which is only an example, and the first message frame may also be other types of frames. In addition, in the following context, the embodiments are described based on the IEEE 802.11ax standard and the IEEE 802.11be standard.

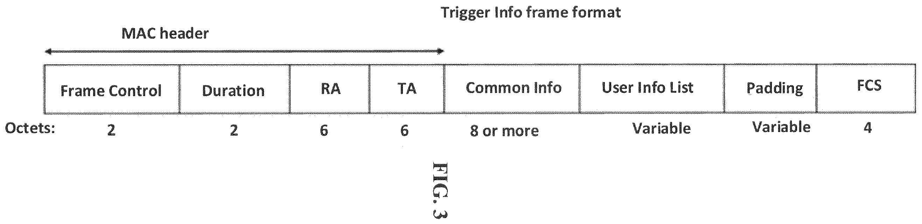

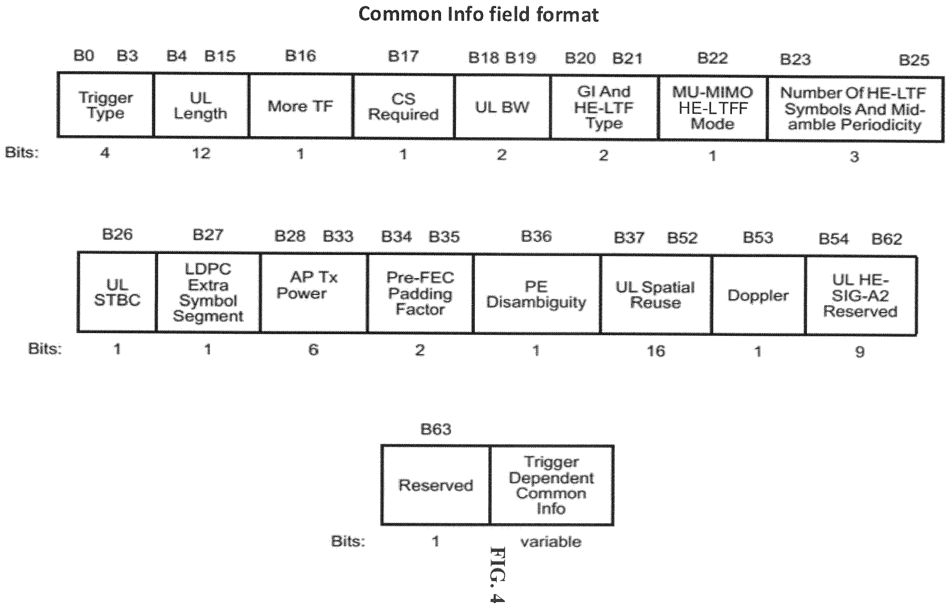

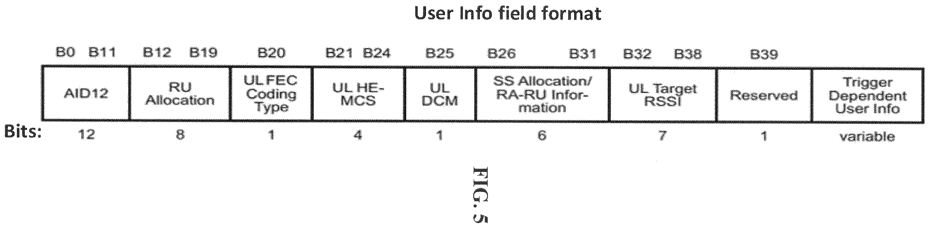

The general format of the trigger frame can be illustrated in FIG. 3, an example of the Common Info field included in the trigger frame is illustrated in FIG. 4, and an example of the User Info field of the User Info List included in the trigger frame is illustrated in FIG. 5.

According to the embodiment of the disclosure, information about the RU can be set based on the Uplink Bandwidth (UL BW) subfield in the Common Info field and the RU Allocation subfield in the User Info field. The RU Allocation subfield, together with the UL BW, can be configured to identify the RU size and the RU location of the RU, which is shown in Table 1 below.

**Table 1. B7-B1 of RU Allocation subfield**

| B7-B1 of RU Allocation subfield | UL BW subfield | RU size | RU index |
|---|---|---|---|
| 0-8 | 20 MHz, 40 MHz, 80 MHz, 80+80 MHz or 160 MHz | 26 | RU1 to RU9 respectively |
| 9-17 | 40 MHz, 80 MHz, 80+80 MHz or 160 MHz | | RU10 to RU18 respectively |
| 18-36 | 80 MHz, 80+80 MHz or 160 MHz | | RU19 to RU37 respectively |
| 37-40 | 20 MHz, 40 MHz, 80 MHz, 80+80 MHz or 160 MHz | 52 | RU1 to RU4 respectively |
| 41-44 | 40 MHz, 80 MHz, 80+80 MHz or 160 MHz | | RU5 to RU8 respectively |
| 45-52 | 80 MHz, 80+80 MHz or 160 MHz | | RU9 to RU16 respectively |
| 53,54 | 20 MHz, 40 MHz, 80 MHz, 80+80 MHz or 160 MHz | 106 | RU1 and RU2 respectively |
| 55,56 | 40 MHz, 80 MHz, 80+80 MHz or 160 MHz | | RU3 and RU4 respectively |
| 57-60 | 80 MHz, 80+80 MHz or 160 MHz | | RU5 to RU8 respectively |
| 61 | 20 MHz, 40 MHz, 80 MHz, 80+80 MHz or 160 MHz | 242 | RU1 |
| 62 | 40 MHz, 80 MHz, 80+80 MHz or 160 MHz | | RU2 |
| 63,64 | 80 MHz, 80+80 MHz or 160 MHz | | RU3 and RU4 respectively |
| 65 | 40 MHz, 80 MHz, 80+80 MHz or 160 MHz | 484 | RU1 |
| 66 | 80 MHz, 80+80 MHz or 160 MHz | | RU2 |
| 67 | 80 MHz, 80+80 MHz or 160 MHz | 996 | RU1 |
| 68 | 80+80 MHz or 160 MHz | 2×996 | RU1 |

The lowest bit of the RU Allocation subfield (B0) can be set to correspond to the bandwidth identified in the UL BW, and other 7 bits of the RU Allocation subfield (B7-B1) can identify a total of 128 values (0-127). As shown in Table 1, in the IEEE 802.11ax standard, each value in the RU Allocation subfield (e.g., 0-68) can be configured to identify a respective single-type RU index. To realize backward compatibility, the IEEE802.11be standard can continue to use the RU Allocation subfield to identify respective multi-RU indexes.

According to the embodiment, in the IEEE802.11ax standard, the values 0-68 in the RU Allocation subfield have been utilized to identify the single-type RUs, so in the IEEE802.11be standard, new values can be utilized to define the multi-RUs. For example, examples of the multi-RUs can include: 2×996 tone (the number is 1), 4×996 tone (the number is 1), 52+26 tone (the number is 6), 106+26 tone (4), 484+242 tone (the number is 4), 996+484 tone (the number is 4), 996+484+242 tone (the number is 8), 2×996+484tone (the number is 12), 3×996 tone (the number is 4), and 3×996+484 tone (the number is 8). The above examples are in bandwidths of 20 MHz, 40 MHz, 80 MHz, 80+80/160 MHz, and 160+160/320 MHz. It is understandable that the above examples of the multi-RUs are for illustrative purposes only and are not intended to limit the scope of the disclosure. For example, each multi-RU and its number in an embodiment may be different from the above examples but other variants.

In an example, new values (e.g., 69-118) can be used to sequentially define: six RUs whose size is 52+26 tone, four RUs whose size is 106+26 tone, four RUs whose size is 484+242 tone, four RUs whose size is 996+484 tone, eight RUs whose size is 996+484+242 tone, twelve RUs whose size is 2×996+484tone, four RUs whose size is 3×996 tone, and eight RUs whose size is 3×996+484 tone. For example, the values "69 to 74" in the RU Allocation subfield corresponds to RU1 to RU6 respectively, and each of RU1 to RU6 has 52+26 tones respectively. That is, each of RU1 to RU6 is composed of one single-type RU whose number of subcarriers is 52, i.e., the 52 tone, and another single-type RU whose number of subcarriers is 26, i.e., the 26 tone. Other multi-RUs can be set up similarly, and the repetitive descriptions are omitted for brevity. In addition, it is understandable that the above examples are for illustrative purposes only and not for limiting purposes, and that other ways of setting the RU Allocation subfield are possible.

As illustrated in FIGS. 3 to 5, the first message frame may include a RU allocation subfield. The communication method according to the embodiment of the disclosure may further include: setting the RU allocation subfield to a first value for indicating an index of the RU. In detail, when the first value is set to a value that is within a first range of values, the RU is a single-type RU. When the first value is set to a value different from values within the first range of values, the RU is a multi-RU. In an example, the first range of values are, for example, 0-68 shown in Table 1 and may correspond to respective single-type RU indexes. That is, in determining the first message frame at step 210, for the IEEE802.11ax STA, a single-type RU can be assigned to the IEEE802.11ax STA by using the RU Allocation subfield shown in Table 1 (for example, using a corresponding value within 0-68). For the IEEE802.11be STA, the RU Allocation subfield may be set to a new value other than 0-68, to assign a multi-RU to the IEEE802.11be STA.

Since the maximum operating bandwidth supported by IEEE802.11ax is 160MHz, the following context mainly describes an example of designing the first message frame when the IEEE802.11be STA and IEEE802.1 1ax STA coexist in a bandwidth less than or equal to 160 MHz and in a bandwidth of 160+160 MHz/320 MHz.

I. The working channel bandwidth of the BSS of the AP is 160 MHz or below 160 MHz.

When the working channel bandwidth of the BSS of the AP is less than or equal to 160MHz, the IEEE802.11be STA and the IEEE802.11ax STA coexist in the BSS. Since the maximum bandwidth supported by the IEEE802.11ax STA is 160 MHz, the maximum value of UL BW can be configured to identify the 160 MHz (80+80 MHz).

In order to maintain the compatibility, the setting of UL BW can be the same as that in existing standard. For the IEEE802.11ax STA, the values of RU Allocation subfield shown in Table 1 can be used to identify the single-type RUs. In addition, for the IEEE802.11be STA, new values can be used to identify the multi-RUs. According to an embodiment of the disclosure, for the IEEE802.11be STA, the reserved bit (B39) in the User Info field illustrated in FIG. 5 can be configured to define a first identifier indicating that a multi-RU has been assigned. That is, the first message frame according to the embodiment of the disclosure may further include: a first identifier indicating that a multi-RU has been assigned. In an embodiment, the STA that has received the first message frame can identify, based on the first identifier, that the assigned RU is the multi-RU.

According to the embodiment of the disclosure, in case I, for the IEEE802.11ax STA, a way of setting the first message frame can be: setting bandwidth information in the UL BW and setting a value of the RU Allocation subfield accordingly according to Table 1. For the IEEE802.11be STA, a way of setting the first message frame can be: setting bandwidth information in the UL BW, setting a value of the RU Allocation subfield according to a value different from the values in Table 1, and setting the first identifier indicating that a multi-RU has been assigned.

II. The working channel bandwidth of the BSS of the AP is 160+160 MHz/320 MHz.

When the working channel bandwidth of the BBS of the AP is 160+160 MHz/320 MHz, since the maximum bandwidth supported by the IEEE802.11ax STA is 160MHz, there may be a case where the IEEE802.11be STA and the IEEE802.11ax STA coexist in the BSS.

In case II, for the IEEE802.11ax STA, the UL BW can be set to 160 MHz, and the RU Allocation subfield can be set to the largest-size RU (i.e., 2×996 tone shown in Table 1). For the IEEE802.1 The STA, the setting of the RU Allocation subfield is similar to the above-mentioned Case I, and the UL BW can be set to 160 MHz, but the RU can be assigned in the higher frequency bandwidth of 160 MHz (i.e., less than 160MHz) or in the lower frequency bandwidth of 160 MHz (i.e., greater than 160MHz and less than or equal to 320MHz). Therefore, the reserved bit (B63) in the Common Info field as illustrated in FIG. 4 can be configured to define a third identifier indicating the frequency band corresponding to the multi-RU.

According to the embodiment, for the IEEE802.1The STA, in addition to the setting of the RU Allocation subfield, it also needs to use the UL BW and the third identifier to indicate the bandwidth and frequency band information corresponding to the multi-RU. In an embodiment, for convenience of description, the UL BW may be referred to as a second identifier indicating the bandwidth corresponding to the multi-RU. That is, the first message frame may further include: a second identifier indicating the bandwidth corresponding to the multi-RU and a third identifier indicating the frequency band corresponding to the multi-RU. According to an embodiment of the disclosure, the communication method illustrated in FIG. 2 may further include: setting the second identifier to a second value corresponding to the bandwidth of 160MHz, and setting the third identifier to a third value corresponding to a lower frequency band indicating lower 160MHz bandwidth. According to an embodiment of the disclosure, the communication method illustrated in FIG. 2 may further include: setting the second identifier to a second value corresponding to the 160MHz bandwidth, and setting the third identifier to a fourth value corresponding to the higher frequency band indicating the higher 160MHz bandwidth.

According to the embodiment of the disclosure, in case II, for the IEEE802.1 1ax STA, a way of setting the first message frame may be: setting the UL BW to 160MHz, and setting the RU Allocation subfield to the maximum-size RU (i.e., 2×996 tone in Table 1). For the IEEE802.11be STA, a way of setting the first message frame may be: setting the UL BW to 160MHz, setting the RU Allocation subfield to a value different from values in Table 1, and setting the third identifier to a value corresponding to the lower frequency band or a value corresponding to the higher frequency band. In an example, when the UL BW is set to 160MHz, if the third identifier is 0 (i.e., the third value), then the third identifier indicates the lower frequency band, i.e., the lower 160MHz bandwidth, and if the third identifier is 1 (i.e., the fourth value), then the third identifier indicates the higher frequency band, i.e., the higher 160MHz bandwidth. It is understandable that the above is only an example, and is not used to limit the embodiments of the disclosure. For example, the value can be set as indicating different meanings.

Although the embodiments in case I and case II are described separately herein, it is understandable that various combinations and modifications can be made to the embodiments described in case I and case II.

In addition, although ways of setting the first message frame when the IEEE802.11be STA and the IEEE802.11ax STA bot exist in a bandwidth less than or equal to 160MHz and in a bandwidth of 160+160 MHz/320 MHz are described above, the above examples are not limited in the embodiments of the disclosure. For example, the IEEE802.11be STA and the IEEE802.11ax STA may coexist in the bandwidth of 160+80 MHz/240 MHz. In this case, in order to assign the corresponding RU to the IEEE802.11be STA for uplink transmission, the way of setting the RU Allocation subfield can be the same as the way in the above Case I and Case II, but the UL BW is newly defined (for example, using another reserved bit to define the UL BW) to indicate a bandwidth of 160+80 MHz/240 MHz.

As illustrated in FIG. 2, at step 220, the determined first message frame is sent. According to an embodiment, a device (e.g., STA) that has received the first message frame can perform uplink transmission according to the information about the RU in the first message frame.

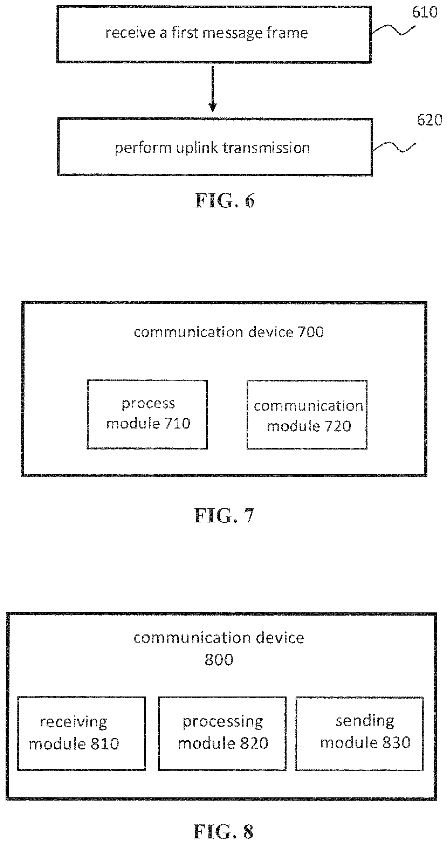

FIG. 6 is a flowchart illustrating a communication method according to an embodiment of the disclosure. According to an embodiment of the disclosure, the communication method illustrated in FIG. 6 can be performed by a STA.

As illustrated in FIG. 6, at step 610, the first message frame is received. According to an embodiment, the first message frame may include information for indicating a RU. The RU is a single-type RU or a multi-RU. In an embodiment, the multi-RU may be composed of single-type RUs. For example, the multi-RU may at least include: a first single-type RU and a second single-type RU. The first single-type RU has a different number of subcarriers than the second single-type RU. According to an embodiment, the multi-RU is assigned in a bandwidth less than or equal to 160MHz. According to another embodiment, the multi-RU is assigned in a bandwidth of 160+160 MHz or 320 MHz.

According to an embodiment, the first message frame may include a RU allocation subfield. According to another embodiment, the first message frame may further include: a first identifier indicating that the multi-RU has been assigned. According to another embodiment, the first message frame may further include: a second identifier indicating a bandwidth corresponding to the multi-RU and a third identifier indicating a frequency band corresponding to the multi-RU. In detail, the way of setting the first message frame may be similar to the embodiment described with reference to FIGS. 2 to 5, and repeated descriptions are omitted here for brevity.

According to an embodiment, the communication method illustrated in FIG. 6 further includes: determining the RU used for uplink transmission based on the value of the RU allocation subfield. As illustrated in FIG. 6, at step 620, the determined RU can be used to perform uplink transmission.

According to an embodiment, the communication method illustrated in FIG. 6 further includes: in response to the RU allocation subfield being set to a value within a first range of values, performing uplink transmission using a single-type RU.

According to an embodiment, the communication method illustrated in FIG. 6 further includes: in response to the RU allocation subfield being set to a value different from values within a first range of values, performing uplink transmission using a multi-RU. As mentioned above, the first range of values may correspond to the values of B7-B1 of the RU allocation subfield shown in Table 1, and the repeated description as the above embodiments is omitted here for the sake of brevity.

According to an embodiment, the communication method illustrated in FIG. 6 further includes: in response to the second identifier being set to a second value corresponding to a bandwidth of 160MHz and the third identifier being set to a third value corresponding to a lower frequency band, performing uplink transmission using a multi-RU in a lower 160MHz bandwidth.

According to an embodiment, the communication method illustrated in FIG. 6 further includes: in response to the second identifier being set to a second value corresponding to a bandwidth of 160MHz and the third identifier being set to a fourth value corresponding to a higher frequency band, performing uplink transmission using a multi-RU in a higher 160MHz bandwidth.

The communication methods depicted with reference to FIG. 2 to FIG. 6 enable compatibility between a communication environment of the IEEE802.11ax STA and the communication environment of the IEEE802.11be STA. In detail, the IEEE802.11ax STA and the IEEE802. 11be STA can both obtain uplink resources simultaneously, thereby improving spectrum utilization efficiency. In addition, different RUs are assigned to different types of STAs, thereby improving system throughput.

FIG. 7 is a block diagram illustrating a communication device according to an embodiment of the disclosure. In an embodiment, the communication device illustrated in FIG. 7 can be applied to an AP.

As illustrated in FIG. 7, the communication device 700 includes a process module 710 and a communication module 720. The process module 710 is configured to determine a first message frame. The first message frame includes information for indicating a RU. The RU is a single-type RU or a multi-RU. The RU is used by a STA for uplink transmission. The communication module 720 is configured to send the first message frame.

According to an embodiment of the disclosure, the multi-RU is consisted of single-type RUs. For example, the multi-RU at least includes: a first single-type RU and a second single-type RU. The first single-type RU has a different number of subcarriers than the second single-type RU.

According to an embodiment of the disclosure, the first message frame includes: a RU allocation subfield. The process module 710 is further configured to: set the RU allocation subfield to a first value for indicating an index of the RU. According to an embodiment of the disclosure, the process module 710 is further configured to: set the first value to a value within a first range of values, for indicating that the RU is a single-type RU. According to an embodiment of the disclosure, the process module 710 is further configured to: set the first value to a value different from values in a first range of values, for indicating that the RU is a multi-RU.

According to an embodiment of the disclosure, the first message frame further includes: a first identifier indicating that a multi-RU has been assigned. According to an embodiment of the disclosure, the first message frame further includes: a second identifier indicating a bandwidth corresponding to the multi-RU and a third identifier indicating a frequency band corresponding to the multi-RU. In detail, the way of setting the first message frame may be similar to the embodiments described in FIGS. 2-5, and repetitive description is omitted here for brevity.

According to an embodiment of the disclosure, the process module 710 is further configured to: set the second identifier to a second value corresponding to a bandwidth of 160MHz, and set the third identifier to a third value corresponding to a lower frequency band indicating lower 160MHz bandwidth.

According to an embodiment of the disclosure, the process module 710 is further configured to: set the second identifier to a second value corresponding to a bandwidth of 160MHz, and set the third identifier to a fourth value corresponding to a higher frequency band indicating higher 160MHz bandwidth.

The communication device illustrated in FIG. 7 may perform the methods described with reference to FIGS. 2-5, and the repetitive description is omitted herein for brevity. The communication device 700 illustrated in FIG. 7 is only an example, which is not used to limit the embodiments of the disclosure. For example, the communication device 700 may also include other modules, such as, memory modules. Further, the individual modules in the communication device 700 may be combined into more complex modules or may be divided into more separate modules.

FIG. 8 is a block diagram illustrating another communication device according to an embodiment of the disclosure. In an embodiment, the communication device illustrated in FIG. 8 can be applied to a STA.

As illustrated in FIG. 8, the communication device 800 may include a receiving module 810, a processing module 820, and a sending module 830.

The receiving module 810 is configured to: receive a first message frame. The first message frame includes information for indicating a RU. The RU is a single-type RU or a multi-RU. According to the embodiment, the multi-RU may be consisted of single-type RUs. For example, the multi-RU may at least include: a first single-type RU and a second single-type RU. The first single-type RU has a different number of subcarriers than the second single-type RU. According to the embodiment, the multi-RU is assigned in a bandwidth less than or equal to 160 MHz. According to another embodiment, the multi-RU is assigned in a bandwidth of 160+160 MHz or 320 MHz.

The processing module 820 is configured to: determine the RU for uplink transmission based on a value of the RU allocation subfield.

The sending module 830 is configured to: perform uplink transmission using the RU.

According to an embodiment of the disclosure, the processing module 820 is further configured to: in response to the RU allocation subfield being set to a value within a first range of values, control the sending module 830 to perform uplink transmission using a single-type RU.

According to an embodiment of the disclosure, the processing module 820 is further configured to: in response to the RU allocation subfield being set to a value different from values within a first range of values, control the sending module 830 to perform uplink transmission using a multi-RU.

As described above for Case I and Case II, the first message frame may further include: a first identifier indicating that a multi-RU has been assigned. In addition, the first message frame may also include: a second identifier indicating a bandwidth corresponding to the multi-RU and a third identifier indicating a frequency band corresponding to the multi-RU. In detail, the setting of the first message frame may be similar to the embodiments described with reference to FIGS. 2 to 5, and the repetitive description is omitted herein for brevity.

According to an embodiment of the disclosure, the processing module 820 is further configured to: in response to the second identifier being set to a second value corresponding to a bandwidth of 160MHz and the third identifier being set to a third value corresponding to a lower frequency band, control the sending module 830 to perform uplink transmission using the multi-RU in a lower 160MHz bandwidth.

According to an embodiment of the disclosure, the processing module 820 is further configured to: in response to the second identifier being set to a second value corresponding to a bandwidth of 160MHz and the third identifier being set to a fourth value corresponding to a higher frequency band, control the sending module 830 to perform uplink transmission using the multi-RU in a higher 160MHz bandwidth.

The communication device 800 illustrated in FIG. 8 may perform the method described with reference to FIG. 6, and the repetitive description is omitted herein for brevity. Further, the communication device 800 illustrated in FIG. 8 is only an example and is not used to limit embodiments of the disclosure. For example, the communication device 800 may also include a memory module. In addition, the individual modules in the communication device 800 may be combined into more complex modules, or may be divided into more separate modules.

The communication devices depicted with reference to FIG. 7 and FIG. 8 enable compatibility between a communication environment of the IEEE802.11ax STA and a communication environment of the IEEE802.11be STA. In detail, the IEEE802.11ax STAs and the IEEE802.11be STAs can both obtain uplink resources simultaneously, thereby improving spectrum utilization efficiency. In addition, different RUs can be assigned to different types of STAs, thereby improving system throughput.

Based on the same principles as the method provided in the embodiments of the disclosure, the embodiment of the disclosure provides an electronic device. The electronic device includes a processor and a memory storing computer readable instructions (which may also be referred to as a computer program). When the computer readable instructions are executed by the processor, the method described with reference to FIGS. 2-6 is implemented.

The embodiment of the disclosure provides a computer-readable storage medium having a computer program stored thereon. When the computer program is executed by the processor, the method described with reference to FIGS. 2-6 is implemented.

In the embodiments, the processor may be a logic box, a module or a circuit for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement a computing function, for example, a combination consisting of one or more microprocessors, and a combination consisting of DSPs and microprocessors.

In the embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It is understandable that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been shown and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A communication method, performed by an access point, the method comprising:
determining a first message frame, wherein the first message frame comprises information for indicating a resource unit, the resource unit is a single-type resource unit or a multi-resource unit, and the resource unit is used by a station for uplink transmission; and
sending the first message frame.

2. The method of claim 1, wherein the multi-resource unit consists of single-type resource units.

3. The method of claim 1 or 2, wherein the multi-resource unit at least comprises: a first single-type resource unit and a second single-type resource unit, and
the first single-type resource unit has a different number of subcarriers than the second single-type resource unit.

4. The method of claim 1, wherein the first message frame comprises: a resource unit allocation subfield,
and the communication method further comprises: setting the resource unit allocation subfield to a first value for indicating an index of the resource unit.

5. The method of claim 4, wherein the resource unit is the single-type resource unit, in response to the first value being a value within a first range of values.

6. The method of claim 4, wherein the resource unit is the multi-resource unit, in response to the first value being a value different from values within a first range of values.

7. The method of any one of claims 1 to 6, wherein the first message frame further comprises:
a first identifier indicating that the multi-resource unit has been assigned.

8. The method of any one of claims 1 to 6, wherein the first message frame further comprises:
a second identifier indicating a bandwidth corresponding to the multi-resource unit and a third identifier indicating a frequency band corresponding to the multi-resource unit.

9. The method of claim 8, further comprising:
setting the second identifier to a second value corresponding to a bandwidth of 160 MHz, and setting the third identifier to a third value corresponding to a lower frequency band indicating lower 160 MHz bandwidth.

10. The method of claim 8, further comprising:
setting the second identifier to a second value corresponding to a bandwidth of 160 MHz, and setting the third identifier to a fourth value corresponding to a higher frequency band indicating higher 160 MHz bandwidth.

11. The method of any one of claims 1 to 10, wherein the multi-resource unit is assigned in a bandwidth less than or equal to 160 MHz.

12. The method of any one of claims 1 to 10, wherein the multi-resource unit is assigned in a bandwidth of 160+160 MHz or 320 MHz.

13. A communication method, performed by a station, the method comprising:
receiving a first message frame, wherein the first message frame comprises information for indicating a resource unit, and the resource unit is a single-type resource unit or a multi-resource unit; and
performing uplink transmission using the resource unit.

14. The method of claim 13, wherein the multi-resource unit consists of single-type resource units.

15. The method of claim 13 or 14, wherein the multi-resource unit at least comprises: a first single-type resource unit and a second single-type resource unit, and
the first single-type resource unit has a different number of subcarriers than the second single-type resource unit.

16. The method of claim 13, wherein the first message frame comprises: a resource unit allocation subfield,
and the communication method further comprises: determining the resource unit for uplink transmission based on a value of the resource unit allocation subfield.

17. The method of claim 16, further comprising: performing uplink transmission using the single-type resource unit, in response to the resource unit allocation subfield being set to a value within a first range of values.

18. The method of claim 16, further comprising: performing uplink transmission using the multi-resource unit, in response to the resource unit allocation subfield being set to a value different from values within a first range of values.

19. The method of any one of claims 13 to 18, wherein the first message frame further comprises: a first identifier indicating that the multi-resource unit has been assigned.

20. The method of any one of claims 13 to 18, wherein the first message frame further comprises: a second identifier indicating a bandwidth corresponding to the multi-resource unit and a third identifier indicating a frequency band corresponding to the multi-resource unit.

21. The method of claim 20, further comprising:
performing uplink transmission using the multi-resource unit in a lower 160 MHz bandwidth, in response to the second identifier being set to a second value corresponding to a bandwidth of 160 MHz and the third identifier being set to a third value corresponding to a lower frequency band.

22. The method of claim 20, further comprising: performing uplink transmission using the multi-resource unit in a higher 160 MHz bandwidth, in response to the second identifier being set to a second value corresponding to a bandwidth of 160 MHz and the third identifier being set to a fourth value corresponding to a higher frequency band.

23. The method of any one of claims 13 to 22, wherein the multi-resource unit is assigned in a bandwidth less than or equal to 160 MHz.

24. The method of any one of claims 13 to 22, wherein the multi-resource unit is assigned in a bandwidth of 160+160 MHz or 320 MHz.

25. A communication device, applied to an access point, the communication device comprising:
a process module, configured to determine a first message frame, the first message frame comprises information for indicating a resource unit, wherein the resource unit is a single-type resource unit or a multi-resource unit, and the resource unit is used by a station for uplink transmission; and
a communication module, configured to send the first message frame.

26. A communication device, applied to a station, the communication device comprising:
a receiving module, configured to receive a first message frame, the first message frame comprises information for indicating a resource unit, and the resource unit is a single-type resource unit or a multi-resource unit; and
a sending module, configured to perform uplink transmission using the resource unit.

27. An electronic device comprising: a memory, a processor and a computer program stored on the memory and executable by the processor, wherein when the computer program is executed by the processor, the method of any one of claims 1 to 12 or the method of any one of claims 13 to 24 is implemented.

28. A computer readable storage medium, having a computer program stored thereon, wherein when the computer program is executed by a processor, the method of any one of claims 1 to 12 or the method of any one of claims 13 to 24 is implemented.
